# EUROPÄISCHE PATENTSCHRIFT

(11) **EP 1 674 312 B1**
(45) Veröffentlichungstag und Bekanntmachung des Hinweises auf die Patenterteilung: **27.01.2010**
(21) Anmeldenummer: 05027914.0
(22) Anmeldetag: 20.12.2005
(51) Int. Cl.: B60J 1/20

(54) **Seitenfensterrollo für Kraftfahrzeuge**
Roller blind for vehicle side window
Store à enrouleur pour une vitre latérale de véhicule

(30) Priorität: 22.12.2004 DE 202004019785 U
(43) Veröffentlichungstag der Anmeldung: 28.06.2006
(73) Patentinhaber: HS Products Engineering GmbH, 82239 Alling (DE)
(72) Erfinder: Ziegenbein, Werner, 81929 München (DE)
(74) Vertreter: Schatt, Markus F.

(56) Entgegenhaltungen:
- EP-A- 1 149 718
- EP-A- 1 418 073
- US-A- 6 047 762

## Beschreibung

Die Erfindung betrifft ein Seitenfensterrollosystem nach dem Oberbegriff des Patentanspruches 1.

Aus Gründen zunehmender Individualisierung des Designs weisen Seitenfenster moderner Kraftfahrzeuge unterschiedliche Formen auf. Beispielsweise werden die B-Säulen von Fahrzeugen oftmals nicht länger senkrecht, sondern nach hinten geneigt angeordnet, um einen dynamischeren Eindruck zu erzielen. Entsprechend weisen Seitenfenster in den vorderen und/oder hinteren Türen bzw. in der Karosserie geneigte, vordere und/oder hintere Fensterrahmenkanten auf. Ebenfalls aus ästhetischen oder aerodynamischen Gründen ist die obere Fensterrahmenkante oft nicht länger im Wesentlichen horizontal bzw. parallel zur unteren Fensterrahmenkante angeordnet, sondern weist dieser gegenüber einen Neigungswinkel auf und ist oftmals gekrümmt.

Seitenfensterrollos für Seitenfenster mit den genannten Merkmalen weisen daher bekanntermaßen eine Rollobahn mit einem entsprechend individualisierten Zuschnitt auf. Die Fensterform erfordert ferner, dass Seitenfensterrollos entlang koplexerer Bewegungsbahnen geschlossen und geöffnet werden müssen, wobei die Aufrolleinrichtung wie auch die Antriebseinrichtung eingerichtet sind, das Rollo der Kontur des Fensters folgend auf- bzw. abzuwickeln. Hierzu sind beispielsweise ungleiche Antriebsübersetzungen für die Rollobahn entlang der Fensterrahmenvorderkante bzw. -hinterkante vorgesehen. Ferner ist es bekannt, die Wickelwelle kegelförmig auszugestalten, um zu einer geeigneten Abwicklung der Rollobahn zu gelangen.

Unterschiedliche Getriebe für die Antriebseinrichtung und/oder unterschiedliche Ausprägungen der Aufrolleinrichtung sind somit erforderlich, um eine Anpassung an die Vielzahl unterschiedlicher Seitenfensterkonturen von Fahrzeugtyp zu Fahrzeugtyp und selbst innerhalb desselben Fahrzeugs zu ermöglichen. Ein Nachteil der bekannten Seitenfensterrollos ist demnach, dass eine Vielzahl individuell angepasster Einzelteile für jedes Seitenfenster benötigt wird. Die Produktionskosten steigen folglich.

Aus US-A-6047762 ist ein Seitenfensterrollosystem gemäß dem Oberbegriff des Patentanspruches 1 bekannt. Das bekannte Seitenfensterrollosystem weist eine Rollobahn auf, welche auf einer Wickelwelle aufgewickelt und von dieser Wickelwelle abgewickelt werden kann. Als Vorschubmittel wirken zu Federspulen vorgespannte Flachfedern, welche auf einen mit der Rollobahn verbundenen Zugstab wirken und eine Zugkraft zum Nachobenziehen der Rollobahn ausüben. Außerdem wird die Wickelwelle von einem Antriebsmotor angetrieben.

Aus EP-A-1149718 sowie aus EP-A-1418073 sind Seitenfensterrollosysteme bekannt, bei denen die Antriebskraft eines Antriebsmotors über am Zugstab der Rollobahn angreifende Antriebskabel übertragen wird. Die Antriebskabel stehen dabei mit einem vom Antriebsmotor angetriebenen Zahnrad an gegenüberliegenden Seiten des Zahnrades in Eingriff. Das Zahnrad ist so angeordnet, dass seine Achse senkrecht zur Drehachse der Wickelwelle verläuft.

Aufgabe der Erfindung ist es daher, ein Seitenfensterrollosystem einem hohen Grad an Universalität zu schaffen, wobei eine einfache, an beiden Seiten auf die Rollobahn gleichförmig wirkende Antriebseinrichtung vorgesehen ist.

Die Aufgabe wird durch ein Seitenfensterrollosystem mit den Merkmalen des Patentanspruchs 1 gelöst.

Eine schräge Einbaulage der Wickelwelle bzw. deren zentraler Drehachse bewirkt, dass der Geometrie einer Vielzahl von Seitenfenstern, insbesondere wenn beispielsweise die B-Säule der Kraftfahrzeuge unterschiedliche Neigungen gegenüber der Vertikalen aufweisen, bereits auf einfache Weise Rechnung getragen werden kann, da unabhängig von der Neigung eine zylindrische Wickelwelle eingesetzt werden kann. Die Rollobahn wird gleichförmig, d.h. entlang ihrer Vorderkante und ihrer Hinterkante mit gleicher Geschwindigkeit ab- und aufgewickelt, so dass keine unterschiedlichen Getriebeübersetzungen nötig sind. Ein Absenken der Einbauposition der Wickelwelle bewirkt darüber hinaus, dass die Rollobahn nicht vollständig aufgewickelt werden muss, um unter die unteren Fensterrahmenkante abgesenkt werden zu können.

Vorzugsweise weist das Seitenfensterrollosystem eine im Bereich des freien Endes der Rollobahn befestigte Zugstange auf, an der zum Abwickeln die Vorschubmittel angreifen und die der Kontur der oberen Fensterrahmenkante im geschlossenen Zustand des Rollos im Wesentlichen folgt. Mit der Zugstange wird die Oberkante der Rollobahn stabilisiert, so dass die Antriebskräfte gleichmäßig entlang der gesamten Breite der Rollobahn angreifen. Gleichzeitig sorgt die der Kontur der oberen Fensterrahmenkante folgende Zugstange für einen dichten Abschluss im geschlossenen Zustand des Rollos.

Hierbei weisen die Enden der Zugstange in der Grundstellung vorzugsweise unterschiedliche Abstände von der Drehachse der Wickelwelle auf.

Wegunterschiede der Rollobahn entlang Ihrer Vorder- und Hinterkante können durch einen solchen in der heruntergefahrenen Grundstellung nicht aufgewickelten Vor-Auszug der Rollobahn ausgeglichen werden. Die Länge des Vor-Auszugs kann durch ein entsprechend weites Absenken der Wickelwelle innerhalb der Tür- oder Karosserieverkleidung des Kraftfahrzeugs ausgeglichen werden. Hierdurch ergeben sich mehr Gestaltungsmöglichkeiten für die Ausgestaltung des freien Endes der Rollobahn bzw. der Zugstange, so dass deren Oberkante an eine Vielzahl verschiedener oberer Fensterrahmenkanten angepasst werden kann.

In einer bevorzugten Ausführungsform weisen die Vorschubmittel zwei als Antriebskabel mit einem schraubenförmig umwickelten Draht ausgebildete biegsame Schubelemente auf, die an jeweils einem Ende der Zugstange angreifen. Dabei ist die Drehachse der Wickelwelle vorzugsweise senkrecht zur Bewegungsrichtung der beiden Antriebskabel angeordnet.

Bei einer typischen Karosserieform, bei der das Seitenfenster durch eine vordere und/oder eine hintere gegenüber der Vertikalen geneigte Fensterrahmenkante begrenzt ist, ist die Drehachse der Wickelwelle dann bevorzugt senkrecht zu der vorderen und/oder hinteren Fensterrahmenkante angeordnet. In diesem Fall kann die Vorder- bzw. die Hinterkante der Rollobahn und die an dieser über die Zugstange angreifenden Antriebskabel im Bereich der Fensterrahmenvorder- und -hinterkante geführt und ggf. von der Verkleidung verdeckt werden.

Die Antriebseinrichtung weist einen Antriebsmotor, eine zur Drehachse der Wickelwelle parallel ausgerichtete, mit dem Antriebsmotor verbundene Antriebswelle und zwei mit der Antriebswelle verbundene, gleichwirkende Getriebeelemente zur Kraftübertragung auf (z. B. Zahnräder, Ritzel oder dgl.), die jeweils mit einem der Antriebskabel in Eingriff stehen. Bei dieser Ausführungsform kann eine Vielzahl gleichartiger Bauelemente innerhalb desselben Seitenfensterrollos verwendet werden. Darüber hinaus können dieselben Bauelemente (z. B. die Getriebeelemente, die Antriebswelle, die Antriebskabel und der Antriebsmotor) für verschiedenartige Seitenfenster verwendet werden. Lediglich die Zugstange muss aufgrund der jeweiligen unterschiedlich ausgeformten oberen Fensterrahmenkante angepasst werden. Letzteres gilt auch für den Zuschnitt der Rollobahn.

Weitere Aufgaben, Merkmale und Vorteile werden nun anhand eines Ausführungsbeispiels mit Hilfe der Zeichnung näher erläutert. Es zeigt:

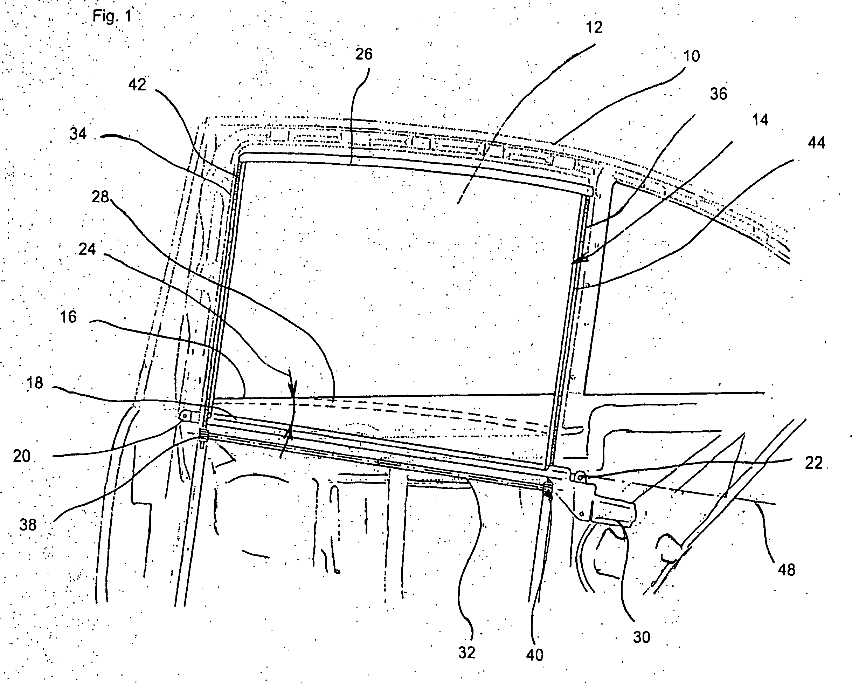

Fig. 1 ein Ausführungsbeispiel des erfindungsgemäßen, in die Seitentür einer Kraftfahrzeugkarosserie eingebauten Seitenfensterrollos.

Gemäß dem in Fig. 1 gezeigten Ausführungsbeispiel weist eine hintere Kraftfahrzeugtür 10 ein geteiltes Seitenfenster auf, dessen vorderer Teil 12 mit einem erfindungsgemäßen, eingebauten Seitenfensterrollosystem verschließbar ist. Unterhalb einer unteren Fensterrahmenkante 16 ist eine Rollokassette 18 durch Befestigungsmittel 20, 22 an Elementen der Karosserie bzw. Seitentür befestigt. Die Befestigungsmittel 20, 22 und die korrespondierenden Befestigungsmittel an der Tür bzw. Karosserie sind so angeordnet, dass die Rollokassette und insbesondere die Drehachse einer in der Rollokassette 18 befindlichen, nicht dargestellten Wickelwelle unter einen spitzen Winkel 24 zu der unteren im Wesentlichen horizontalen Fensterrahmenkante 16 angeordnet ist. Anstelle einer horizontale Fensterrahmenkante kann diese auch einen Knick, Absatz oder eine geringe Neigung von wenigen Grad gegenüber der Horizontalen aufweisen.

An der Oberkante der ausgezogen dargestellten Rollobahn 14 des Seitenfensterrollos 14 befindet sich zur Stabilisierung des freien Endes der Rollobahn 14 eine Zugstange 26. Die Zugstange ist ferner als gestrichelte Kontur 28 in Fig. 1 zur Illustration der heruntergefahrenen Grundstellung des Seitenfensterrollos dargestellt, in der dieses vollständig unter die untere Fensterrahmenkante 16 abgesenkt und somit hinter der nicht dargestellten Türverkleidung verborgen ist. In dieser Grundstellung ist die Rollobahn in Abhängigkeit von dem Verlauf der Fensterrahmenoberkante bzw. der daran angepassten Zugstange 26 auf seiner hinteren Seite bereits weiter aus der Rollokassette 18 herausgezogen als auf der Vorderseite. Die Enden der Zugstange 26 weisen in der Grundstellung also unterschiedliche Abstände von der Drehachse 48 der Wickelwelle auf. Dieser Vor-Auszug sorgt zusammen mit der geneigten Einbauposition der Wickelwelle in der Rollokassette 18 dafür, dass das Seitenfensterrollo 14 geradlinig von dieser abgewickelt werden kann. Als Wickelwelle kann also unabhängig von der Fensterform eine einfache zylinderförmige Welle vorgesehen werden.

Der von dem Seitenfensterrollo 14 verschlossene Teil 12 des Seitenfensters weist eine gegenüber der Vertikalen geneigte vordere und eine dazu parallele hintere Fensterrahmenkante 34, 36 auf. Dies stellt eine besonders einfache Karosseriebauform dar, bei der für das Seitenfensterrollo eine im Wesentlichen über seine gesamte Länge gleich breite Rollobahn benötigt wird. Aber auch für Seitenfenster, die keine parallelen Vorder- und Hinterkanten haben und beispielsweise in Form eines Dreiecksfensters auslaufen, ermöglicht die schräge, zu wenigstens einer der Vorder- oder Hinterkante senkrechte Einbaulage der Wickelwelle eine einfache Bauform derselben.

Als Antriebseinrichtung weist das Seitenfensterrollosystem einen Antriebsmotor 30 auf, der an die Rollokassette angeflanscht und mit einer Antriebswelle. 32 verbunden ist. Diese weist im Abstand der Breite des Seitenfensters 12, bzw. genauer gesagt im Abstand der parallelen Vorder- und Hinterkanten 34, 36 der das Seitenfenster 12 verdeckenden Rollobahn 14, jeweils ein Getriebeelement in Form eines Zahnrads 38, 40 auf. Die Zahnräder 38, 40 greifen in ein jeweils zugeordnetes Antriebskabel 42 bzw. 44 ein. Das Antriebskabel besteht aus einem innenliegenden Drahtseil, um welches ein äußerer Draht schraubenförmig gewickelt ist. Solche Antriebs- oder Bürstenkabel können sowohl auf Zug als auch Druck belastet werden, d. h. eine Antriebskraft übertragen. In die schraubenförmige Wicklung des äußeren Drahts greift dazu die Zahnung der Zahnräder 38 bzw. 40 getriebeartig ein. Jedes der Antriebskabel 42, 44 ist an seinem oberen Ende mit der Zugstange 26 verbunden. Da das Seitenfensterrollo 14 aufgrund der schrägen Einbauposition der Wickelwelle geradlinig von dieser abgewickelt werden kann, sind die Antriebskabel senkrecht zu der Drehachse der Wickelwelle eingebaut und die Antriebselemente können mit gleicher Übersetzung ausgelegt werden. Es kommen hierfür jeweils gleiche Teile zu Einsatz.

Die Antriebskabel sind einerseits steif genug, um als Schubelement die Zugstange 26 anzuheben und damit die mit der Zugstange 26 verbundene Rollobahn gegen die Zugkraft einer mit der Wickelwelle verbundenen Feder von der Wickelwelle abzuziehen. Andererseits sind derartige Antriebskabel flexibel genug, dass sie um eine oder mehrere Umlenkstellen innerhalb der Tür- oder Seitenverkleidung der Kraftfahrzeugkarosserie umgelenkt und somit dort verstaut werden können. Die Zugstange 26 bzw. die Antriebskabel werden parallel zu der vorderen bzw. hinteren Seitenfensterkante geführt und können auch dort hinter der Seitentür- bzw. Seitenteilverkleidung der Karosserie verdeckt werden.

## Patentansprüche

1. Seitenfensterrollosystem für Kraftfahrzeuge mit einer Rollobahn (14) zum Abdecken eines Seitenfensters (12) des Kraftfahrzeugs, einer unterhalb des Seitenfensters eingebauten Aufrolleinrichtung mit einer um eine Drehachse (48) drehbaren Wickelwelle für die Rollobahn (14) und einer einen Antriebsmotor (30) aufweisenden Antriebseinrichtung mit an der Rollobahn (14) angreifenden Vorschubmitteln,
wobei die Drehachse (48) der Wickelwelle unter einem spitzen Winkel zur Unterkante (16) des Seitenfensters (12) angeordnet und die Wickelwelle soweit unter die untere Fensterrahmenkante abgesenkt ist, dass ein eine Oberkante bildendes freies Ende der Rollobahn (14) in einer heruntergefahrenen Grundstellung des Seitenfensterrollos unterhalb der Unterkante (16) des Seitenfensters (12) angeordnet ist,
**dadurch gekennzeichnet, dass** die Antriebseinrichtung eine zur Drehachse (48) der Wickelwelle parallel ausgerichtete, mit dem Antriebsmotor (30) verbundene Antriebswelle (32) und zwei mit der Antriebswelle (32) verbundenene gleichwirkende Getriebeelemente (38, 40) zur Kraftübertragung aufweist, die jeweils mit einem als Antriebskabel (42, 44) ausgebildeten Vorschubmittel in Eingriff stehen.

2. Seitenfensterrollosystem nach Anspruch 1,
**gekennzeichnet durch** eine im Bereich des freien Endes der Rollobahn (14) befestigte Zugstange (26), an der zum Abwickeln die Antriebskabel (42, 44) angreifen und die der Kontur der oberen Fensterrahmenkante im geschlossenen Zustand des Seitenfensterrollosystems (14) im Wesentlichen folgt.

3. Seitenfensterrollosystem nach Anspruch 2,
**dadurch gekennzeichnet, dass** die Enden der Zugstange (26) in der Grundstellung unterschiedliche Abstände von der Drehachse (48) der Wickelwelle aufweisen.

4. Seitenfensterrollosystem nach Anspruch 1,
**dadurch gekennzeichnet, dass** die Vorschubmittel zwei als Antriebskabel (42, 44) mit einem schraubenförmig umwickelten Draht ausgebildete biegsame Schubelemente aufweisen, die an jeweils einem Ende der Zugstange (26) angreifen.

5. Seitenfensterrollosystem nach Anspruch 1,
**dadurch gekennzeichnet, dass** die Drehachse (48) der Wickelwelle senkrecht zur Bewegungsrichtung der beiden Antriebskabel (42, 44) angeordnet ist.

6. Seitenfensterrollosystem nach einem der vorstehenden Ansprüche,
**dadurch gekennzeichnet, dass** die Wickelwelle zylinderförmig ist.

## Claims

1. A side window roller blind system for vehicles, comprising a roller blind web (14) for covering a side window (12) of the vehicle, a winding device installed beneath the side window and having a winding shaft for the roller blind web (14) being rotatable about a rotation axis (48), and a driving device having a driving motor (30) and feeding means acting upon the roller blind web (14),
wherein the rotation axis (48) of the winding shaft being arranged in an acute angle with respect to the lower edge (16) of the side window (12), and the winding shaft being lowered thus far below the lower edge of the window frame that a free end of the roller blind web (14), which is constituting an upper edge, while residing in a lowered home position is arranged underneath the lower edge (16) of the side window (12),
**characterized in that** the driving device comprises a driving shaft (32) being aligned parallel with the rotation axis (48) of the winding shaft and being connected to the driving motor (30), and two cooperating power transmission gear elements connected to the driving shaft (32) and respectively engaged with a feeding means formed as a driving cable (42, 44).

2. The side window roller blind system as claimed in claim 1,
**characterized by** a tension rod (26) being attached in the area of the free end of the roller blind web (14) and upon which the driving cables (42, 44) act for unwinding, and which substantially follows the contour of the upper window frame edge in the closed condition of the side window roller blind system (14).

3. The side window roller blind system as claimed in claim 2,
**characterized in that** the ends of the tension rod (26) residing in the home position have different distances to the rotation axis (48) of the winding shaft.

4. The side window roller blind system as claimed in claim 1,
**characterized in that** the feeding means comprise two flexible pushing elements being formed as driving cables (42, 44) helically wrapped with a wire and acting upon respectively one end of the tension rod (26).

5. The side window roller blind system as claimed in claim 1,
**characterized in that** the rotation axis (48) of the winding shaft being arranged perpendicular to the moving direction of both driving cables (42, 44).

6. The side window roller blind system as claimed in any one of the preceding claims,
**characterized in that** the winding shaft is formed like a cylinder.

## Revendications

1. Système de store pour fenêtre latérale d'automobile, comportant un pan de store (14) pour couvrir une fenêtre latérale (12) de l'automobile, un dispositif d'enroulement monté au-dessous de la fenêtre latérale et qui comprend un arbre d'enroulement mobile autour d'un axe de rotation (48) pour enrouler le pan de store (14) et un mécanisme d'entraînement avec un moteur d'entraînement (30) dont les moyens d'avance sont appliqués au pan de store (14),
l'axe de rotation (48) de l'arbre d'enroulement étant disposé de façon à former un angle aigu avec le bord inférieur (16) de la fenêtre latérale (12) et l'arbre d'enroulement étant placé en-dessous du bord inférieur du cadre de la fenêtre de sorte qu'une extrémité libre du pan de store (14) formant un bord supérieur est disposée au-dessous du bord inférieur (16) de la fenêtre latérale (12) lorsque le pan de store se trouve enroulé dans sa position de repos,
**caractérisé en ce que** le dispositif d'entraînement comprend un arbre d'entraînement (32) disposé parallèle à l'axe de rotation (48) de l'arbre d'enroulement et qui est relié au moteur d'entraînement (30), et deux éléments d'engrenage (38, 40) pour transmettre la force agissant dans le même sens et qui sont solidaires de l'arbre d'entraînement (32) et s'engrènent chacun avec un moyen d'avance constitué par un câble d'entraînement (42, 44).

2. Système de store pour fenêtre latérale selon la revendication 1,
**caractérisé par** une tige de déploiement (26) fixée à proximité de l'extrémité libre du pan de store (14) sur laquelle les câbles d'entraînement (42, 44) agissent pour effectuer le déroulement et qui suit essentiellement le contour du bord supérieur du cadre de la fenêtre lorsque le système de store de fenêtre latérale (14) se trouve enroulé en position de repos.

3. Système de store pour fenêtre latérale selon la revendication 2,
**caractérisé en ce qu'**en position de repos les extrémités de la tige de déploiement (26) se trouvent à des distances différentes par rapport à l'axe de rotation (48) de l'arbre d'enroulement.

4. Système de store pour fenêtre latérale selon la revendication 1,
**caractérisé en ce que** les moyens d'avance comprennent deux éléments de poussée flexibles avec un fil enrobé hélicoïdalement formant câble d'entraînement et dont chacun attaque l'une ou l'autre extrémité de la tige de déploiement (26).

5. Système de store pour fenêtre latérale selon la revendication 1,
**caractérisé en ce que** l'axe de rotation (48) de l'arbre d'enroulement est disposé perpendiculaire au sens de mouvement des deux câbles d'entraînement (42, 44).

6. Système de store pour fenêtres latérales selon l'une quelconque des revendications précédentes,
**caractérisé en ce que** l'arbre d'enroulement est en forme de cylindre.
